# EUROPEAN PATENT SPECIFICATION

(11) **EP 4 253 736 B1**
(45) Date of publication and mention of the grant of the patent: **02.12.2026**
(21) Application number: 22762486.3
(22) Date of filing: 28.02.2022
(51) Int. Cl.: F01P 3/02, F01P 7/16, F02N 19/10, F01N 5/02, F02N 19/02

(54) **VEHICLE AND ENGINE THEREOF**
FAHRZEUG UND MOTOR DAFÜR
VÉHICULE ET MOTEUR ASSOCIÉ

(30) Priority: 01.03.2021 CN 202110227888
(43) Date of publication of application: 04.10.2023
(73) Proprietor: Byd Company Limited, Shenzhen, Guangdong (CN)
(72) Inventor: LIU, Jing, Shenzhen, Guangdong 518118 (CN); ZHANG, Nan, Shenzhen, Guangdong 518118 (CN); PAN, Shiyi, Shenzhen, Guangdong 518118 (CN); MENG, Fanchao, Shenzhen, Guangdong 518118 (CN); LIU, Mingliang, Shenzhen, Guangdong 518118 (CN)
(74) Representative: Dehns Germany Partnerschaft mbB
(86) International application number: PCT/CN2022/078301
(87) International publication number: WO 2022/184021

(56) References cited:
- EP-B1- 1 865 166
- WO-A1-2008/010584
- CN-A- 102 182 538
- CN-A- 107 401 445
- CN-U- 203 430 618
- CN-U- 203 978 589
- CN-U- 209 604 129
- CN-U- 209 604 129
- CN-U- 212 079 449
- CN-U- 213 654 973
- FR-A1- 2 842 248
- JP-B2- 4 395 002
- US-A1- 2020 256 278

## Description

### FIELD

The present invention relates to the technical field of engine temperature control, and in particular to a vehicle and an engine thereof.

### BACKGROUND

Existing thermostats generally include a single thermostat configured to adjust the temperature of the engine water jacket. The engine water jacket generally includes a cylinder head water jacket and a cylinder block water jacket. Upon cold start of the engine water jacket, the coolant enters the cylinder head water jacket and the cylinder block water jacket of the engine water jacket, causing flow of the coolant in the cylinder block water jacket. The heat-up process of the coolant is slow, the heat-up time of the engine water jacket is long and the warm-up of the machine is slow.

CN 209 604 129 U and EP 1 865 166 B1 relate to an engine cooling system. JP 4 395002 B2 and WO 2008/010584 A1 relate to a water jacket insert for an engine cooling system.

### SUMMARY

It is an objective of the present invention to provide a vehicle and an engine thereof and an thermostat assembly to solve the technical problems of long heat-up time of the engine water jacket and slow warm-up of the machine.

The present invention provides an engine and a vehicle with the features of the independent claims. According to the invention, the engine comprises an engine water jacket, a water pump and an thermostat assembly. The engine water jacket, the thermostat assembly and the water pump are connected to form a circulation passage. The thermostat assembly connects between the engine water jacket and the water pump. The engine water jacket includes a cylinder head water jacket and a cylinder block water jacket. The thermostat assembly is configured to enable the coolant to enter the cylinder head water jacket of the engine water jacket during cold start.

According to the invention, the thermostat assembly is further configured to enable the coolant to enter the cylinder head water jacket and the cylinder block water jacket as the temperature of the coolant rises.

According to the invention, a water jacket insert is formed in the cylinder block water jacket. The water jacket insert divides the cylinder block water jacket into a first portion and a second portion, the first portion being positioned close to the cylinder head water jacket. The water jacket insert is configured to enable the flow of the coolant in the first portion to be greater than the flow of the coolant in the second portion.

According to an embodiment, the water pump is an electronic water pump.

The present invention provides a vehicle including the engine described above.

In summary, by providing that the cylinder head water jacket is connected to the first passage, the coolant only enters the cylinder head water jacket of the engine water jacket during cold start of the engine water jacket without entering the cylinder block water jacket of the engine water jacket. The cylinder block water jacket will not lower the temperature of the coolant. As the coolant does not enter the cylinder block water jacket, the coolant in the cylinder block water jacket does not flow. Because the temperature of the cylinder head is higher than the temperature of the cylinder block and the coolant only flows in the cylinder head at higher temperature, the heat-up process of the coolant is sped up so that the temperature of the engine water jacket can quickly reach the required temperature, thereby reducing the time for warm-up of the machine.

### BRIEF DESCRIPTION OF THE DRAWINGS

In order to more clearly explain the technical solutions in the embodiments of the present invention or in related art, the drawings used in the description of the embodiments or the related art will be briefly described below. Obviously, the drawings depicted below are merely some embodiments of the present invention, and those of ordinary skill in the art can obtain other drawings based on these drawings without any creative efforts.
FIG. 1 is a schematic structural view of an engine according to an embodiment of the present invention;
FIG. 2 is a schematic structural view of an engine water jacket in FIG. 1;
FIG. 3 is another schematic structural view of an engine water jacket in FIG. 1;
FIG. 4 is a schematic structural view of an thermostat assembly in FIG. 1; and
FIG. 5 is a schematic cross-sectional structural view of FIG. 4.

### DETAILED DESCRIPTION

The technical solutions in the embodiments of the present invention will be described clearly and fully with reference to the accompanying drawings in the embodiments of the present invention. Apparently, the embodiments described are merely some, rather than all of the embodiments of the present invention. All other embodiments obtained by those of ordinary skill in the art without creative efforts based on the embodiments of the present invention shall fall within the protection scope of the present invention.

The present invention provides a vehicle including an engine.

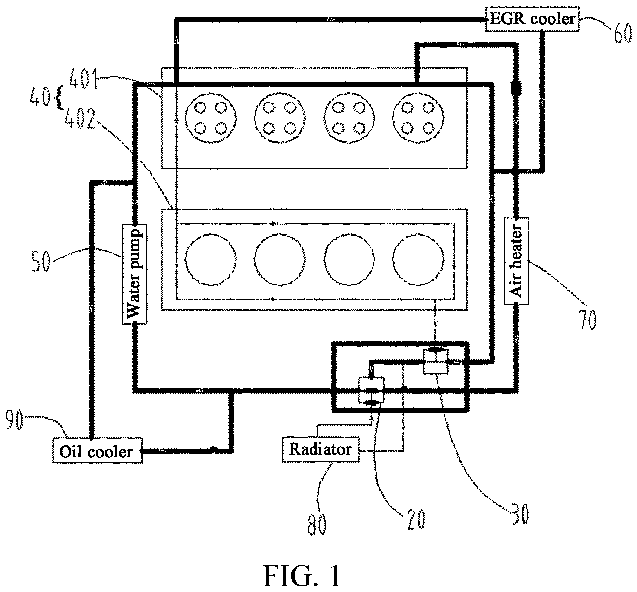

Referring to FIG. 1, the engine includes an engine water jacket 40, a water pump 50 and an thermostat assembly. The engine water jacket 40, the thermostat assembly and the water pump 50 are connected to form a circulation passage. The thermostat assembly connects between the engine water jacket 40 and the water pump 50. The engine includes a cylinder head water jacket 401 and a cylinder block water jacket 402. The circulation passage includes a first passage to which the cylinder head water jacket 401 is connected. It may be understood that the engine further includes an air heater 70, an oil cooler 90 and an EGR cooler 60.

In the present invention, by providing that the cylinder head water jacket 401 is connected to the first passage, the coolant only enters the cylinder head water jacket 401 of the engine water jacket 40 during cold start of the engine water jacket 40 without entering the cylinder block water jacket 402 of the engine water jacket 40, and the cylinder block water jacket 402 will not lower the temperature of the coolant. As the coolant does not enter the cylinder block water jacket 402, the coolant in the cylinder block water jacket 402 does not flow, and because the temperature of the cylinder head is higher than the temperature of the cylinder block and the coolant only flows in the cylinder head at higher temperature, the heat-up process of the coolant is sped up so that the temperature of the engine water jacket 40 can quickly reach the required temperature, thereby reducing the time for warm-up of the machine.

Therefore, in the present invention, by providing that the cylinder head water jacket 401 is connected to the first passage, the coolant only enters the cylinder head water jacket 401 of the engine without entering the cylinder block water jacket 402 of the engine during cold start of the engine, and the cylinder block water jacket 402 will not lower the temperature of the coolant. Also, as the coolant does not enter the cylinder block water jacket 402, the heat-up process of the coolant is sped up so that the temperature of the engine can quickly reach the required temperature, thereby reducing the time for warm-up of the machine. As such, during cold start of the engine, the liquid in the cylinder block will not flow, which enables quick heat-up of the cylinder block and reduces frictional loss in the crankcase.

In a specific embodiment, the circulation passage further includes a second passage to which the cylinder head water jacket 401 and the cylinder block water jacket 402 are connected. For example, the cylinder head water jacket 401 and the cylinder block water jacket 402 are both joined to the second passage. It may be understood that, as the temperature of the coolant rises, the circulation passage can be switched from the first passage to the second passage. In this process, although the temperature of the engine rises, the temperature of the engine has not reached the optimum operating temperature of the engine, and it is still necessary to increase the temperature of the engine water. However, it is necessary to protect the security of the cylinder block of the engine. By joining the cylinder block water jacket 402 to the second passage, the security of the cylinder block can be protected during rise of the temperature of the engine and fuel consumption can be decreased and emission of harmful gas can be reduced.

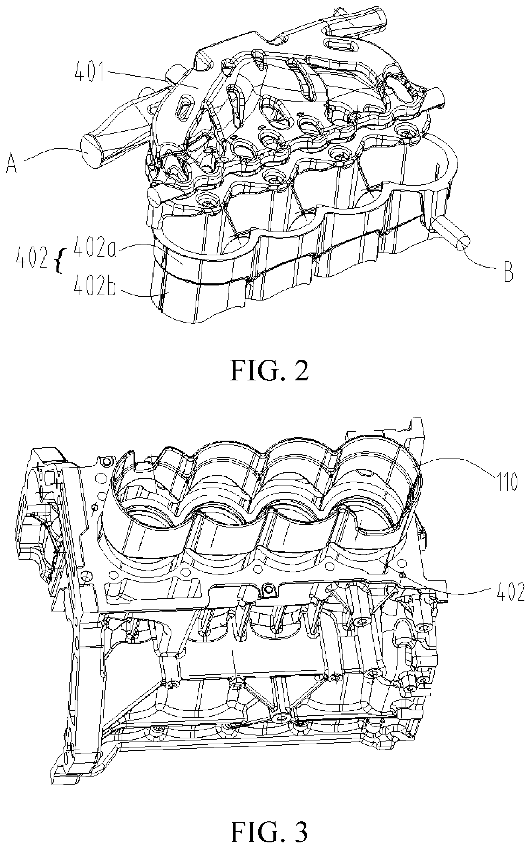

Referring to FIG. 2 and FIG. 3, in a specific embodiment, a water jacket insert 110 is formed in the cylinder block water jacket 402. The water jacket insert 110 divides the cylinder block water jacket 402 into a first portion 402a and a second portion 402b. The first portion 402a is positioned close to the cylinder head water jacket 401. The water jacket insert 110 is configured to enable the content of the coolant in the first portion 402a to be greater than the content of the coolant in the second portion 402b. A water jacket insert 110 is formed in the cylinder block water jacket 402 to divide the cylinder block water jacket 402 into a first portion 402a and a second portion 402b. The first portion 402a is positioned close to the cylinder head water jacket 401. The water jacket insert 110 is configured to enable the content of the coolant in the first portion 402a to be greater than the content of the coolant in the second portion 402b.

As such, in the present invention, by properly distributing the amount of coolant needed by various parts in the cylinder block water jacket 402, the amount of coolant in the second portion 402b is reduced, thereby speeding up warm-up of the machine. It may be understood that when the engine needs cooling, the lower layer of the cylinder block water jacket 402 does not need very great cooling capacity. That is, the second portion 402b of the cylinder block water jacket 402 does not need very great cooling capacity, as long as deformation of the cylinder bore stays within a reasonable range. In consideration of the casting process property of the cylinder block, adding of the water jacket insert 110 enables automatic flow distribution of the coolant in the cylinder block, so that the majority of the flow is concentrated to cool the upper portion of the cylinder block close to the combustion chamber (the first portion 402a) while the flow in the lower portion of the cylinder block (the second portion 402b) is less. With respect to the lower portion of the cylinder block water jacket 402 (the second portion 402b), in consideration of deformation of the cylinder bore, the gap between the water jacket insert 110 and the wall face of the water jacket is determined through emulation and machinery development to achieve the optimum effect.

In a specific embodiment not of the invention, an exhaust pipe is integrated to the cylinder head water jacket 401. The exhaust pipe is provided with an exhaust pipe cooling water jacket. It may be understood that the temperature on the exhaust side is much higher than the intake side of the engine.

In the present invention, as an exhaust pipe is integrated to the cylinder head water jacket 401 and the exhaust pipe is provided with an exhaust pipe cooling water jacket, the temperature of the cylinder head water jacket 401 can rise quickly by using the exhaust heat, so that warm-up of the machine can be further sped up, thereby decreasing the fuel consumption and reducing the emission of harmful gases. Compared with a traditional cylinder head water jacket 401, in the present invention, the intake side cooling water jacket on the cylinder head water jacket 401 is eliminated while still providing satisfactory reliability. As such, the volume of the cylinder head is significantly reduced, the volume of the engine is significantly reduced, the speed of rise of the water temperature is significantly increased, and warm-up of the machine is sped up.

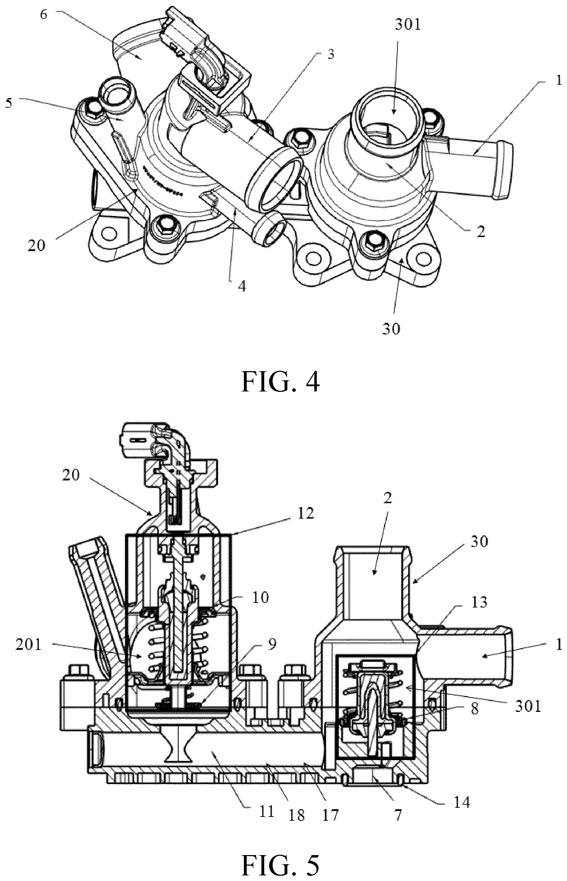

Referring to FIG. 4 and FIG. 5, in a specific embodiment not of the invention, the engine further includes a radiator 80. The thermostat assembly includes a first thermostat 30, a second thermostat 20 and a bypass duct 11. A first accommodating space 301 is formed in the first thermostat 30. The first thermostat 30 is provided with a first water inlet 1, a second water inlet 7, a first water outlet 2 and a second water outlet 17. The first water inlet 1, the second water inlet 7, the first water outlet 2 and the second water outlet 17 communicate with the first accommodating space 301. The first water inlet 1 is connected to the cylinder head water jacket 401, and the second water inlet 7 is connected to the cylinder block water jacket 402. The first water outlet 2 is connected to the radiator 80.

A second accommodating space 201 is formed in the second thermostat 20. The second thermostat 20 is provided with a third water inlet 3, a fourth water inlet 18 and a third water outlet 6. The third water inlet 3, the fourth water inlet 18 and the third water outlet 6 communicate with the second accommodating space 201. The third water inlet 3 is connected to the radiator 80. The third water outlet 6 is connected to the cylinder head water jacket 401 and the cylinder block water jacket 402 respectively.

The second water outlet 17 of the first thermostat 30 is connected to the fourth water inlet 18 of the second thermostat 20 via the bypass duct 11.

The circulation passage further includes a third passage to which the cylinder head water jacket 401, the cylinder block water jacket 402 and the radiator 80 is connected. For example, the cylinder head water jacket 401, the cylinder block water jacket 402 and the radiator 80 are all joined to the third passage. It may be understood that, as the temperature of the coolant rises, the circulation passage can be switched from the second passage to the third passage. In this process, as at the beginning, the coolant is of a great proportion in the bypass duct 11, the radiator 80 is partially opened, and the water temperature is still rising till it reaches a high water temperature, whereupon the valve of the radiator 80 is completely opened and the bypass duct 11 is closed, and the water temperature of the engine rises to a high level. In the present invention, the radiator 80 is utilized to reduce friction in the engine so as to achieve good economy.

As such, in the present invention, by providing the first thermostat 30 and the second thermostat 20 which can jointly adjust the temperature of the engine water jacket 40, there is a variety of manners to adjust the temperature of the engine water jacket 40, so that the temperature of the engine water jacket 40 can be accurately controlled. Furthermore, a bypass duct is integrated to the thermostat assembly in the present invention, which solves the technical problem of the high cost due to the need to add a separate bypass duct in a traditional single thermostat.

It may be understood that the cylinder head water jacket 401 is connected to the first water inlet 1 and the cylinder block water jacket 402 is connected to the second water inlet 7. The present invention solves the technical problem that the traditional single thermostat is arranged at the water outlet or water inlet of the engine and thus the water flow in and out of the cylinder block of the engine cannot be separately controlled and that the engine has a mono cooling mode. An engine is taken as an example for explanation hereinafter.

It may be understood that the coolant flowing through the cylinder head water jacket 401 can enter the first accommodating space 301 via the first water inlet 1, the coolant flowing through the cylinder block water jacket 402 can enter the first accommodating space 301 via the second water inlet 7, the coolant flowing through the first accommodating space 301 can flow out via the first water outlet 2 and enter the radiator 80, and the coolant flowing through the radiator 80 can enter the second accommodating space 201 via the third water inlet 3. The coolant in the first accommodating space 301 can also flow into the second accommodating space 201 via the second water outlet 17, the bypass duct 11 and the fourth water inlet 18 sequentially. The coolant in the second accommodating space 201 can be discharged from the third water outlet 6. The coolant may be cooling water. The third water inlet 3 is connected to the water outlet of the radiator 80 and the first water outlet 2 is connected to the water inlet of the radiator 80. The EGR cooler 60 is provided between the water inlet of the engine water jacket 40 and the thermostat assembly. For example, the EGR cooler 60 is provided between the water inlet of the cylinder head water jacket 401 and the first water inlet 1. The water pump 50 is connected to the entrance A of the cylinder head water jacket 401 and the first water inlet 1 is connected to the exit B of the cylinder block water jacket 402 (FIG. 2).

It may be understood that, as the first water inlet 1 is in communication with the cylinder head water jacket 401 and the second water inlet 7 is in communication with the cylinder block water jacket 402, the engine is connected to the first thermostat 30. As the second water outlet 17 is connected to the water pump 50, the water pump 50 is connected to the second thermostat 20. Therefore, the thermostat assembly in the present invention is connected between the engine and the water pump 50.

In a specific embodiment, the second thermostat 20 is further provided with at least one fifth water inlet. The fifth water inlet and the third water outlet 6 are always opened. It may be understood that there may be two fifth water inlets. For example, in FIG. 4, a fifth water inlet 4 may be connected to an air heater 70 and another fifth water inlet 5 may be connected to an oil cooler 90. The third water outlet 6 may be connected to the cylinder block water jacket 402 via the water pump 50 and the cylinder head water jacket 401 sequentially. The third water outlet 6 may be connected to the cylinder head water jacket 401 via the water pump 50. As the fifth water inlet and the third water outlet 6 are in an always opened state, the coolant can enter via the fifth water inlet and be discharged via the third water outlet 6 continuously.

In the present invention, the first water inlet 1, the second water inlet 7, the first water outlet 2, the third water inlet 3, the fifth water inlet and the third water outlet 6 are all installed on the thermostat assembly. Six to seven pipe joints are integrated to the thermostat assembly in the present invention, which solves the technical problem that most existing thermostats only have two to three integrated pipe joints and other pipe joints are distributed over various pipes so that cost of the overall machine is increased due to low integration level.

In a specific embodiment not of the invention, the first control valve 8 is configured to adjust the opening status of the second water inlet 7 according to the temperature of the cylinder head water jacket 401. For example, the first control valve 8 can adjust the opening status of the second water inlet 7 according to the temperature of the cylinder head water jacket 401. It may be understood that temperature-sensitive wax is provided in the first accommodating space 301. The temperature-sensitive wax can sense the temperature of the engine. The volume of the temperature-sensitive wax expands when the temperature is high to enable the first control valve 8 to be opened to a greater extent, and the volume of the temperature-sensitive wax shrinks when the temperature is low to enable the first control valve 8 to be opened to a less extent. The first control valve 8 controls the opening status of the second water inlet 7 through the volumetric change of the temperature-sensitive wax. The opening status of the second water inlet 7 in the present invention may be 0-100%, for example, 10%, 30%, 50%, 70% or 80% etc. Specifically, in the cylinder head water jacket 401, if the temperature of the cylinder head water jacket 401 rises, the temperature-sensitive wax expands. The first control valve 8 controls the second water inlet 7 to open and can control the opening status of the second water inlet 7 to be gradually increased. In the cylinder head water jacket 401, if the temperature of the cylinder head water jacket 401 decreases, the temperature-sensitive wax shrinks. The first control valve 8 controls the opening status of the second water inlet 7 to be gradually reduced and can control the second water inlet 7 to close. It may be understood that the temperature-sensitive wax can sense the temperature of the coolant flowing out of the cylinder head water jacket 401. That is, the temperature-sensitive wax senses the temperature of the cylinder head water jacket 401 by sensing the temperature of the coolant flowing out of the cylinder head water jacket 401.

In the present invention, when the temperature of the coolant flowing through the cylinder head water jacket 401 is lower than the opening temperature of the cylinder block water jacket 402, the first control valve 8 controls the second water inlet 7 to close and the first passage is switched on. When the temperature of the coolant flowing through the cylinder head water jacket 401 is greater than or equal to the opening temperature of the cylinder block water jacket 402, the first control valve 8 controls the second water inlet 7 to be switched on and controls the opening status of the second water inlet 7 and the second passage is switched on. Optionally, the second water inlet 7 can be completely opened. The first control valve 8 and the parts in the first accommodating space 301 can form a mechanical control assembly 13. The first control valve 8 is an electronic valve or a mechanical valve.

In a specific embodiment not of the invention, the second accommodating space 201 is provided with a second control valve 9 inside. The second control valve 9 is configured to control the opening status of the fourth water inlet 18; and/or the second accommodating space 201 is provided with a third control valve 10 inside arranged at an interval from the second control valve 9 and configured to control the opening status of the third water inlet 3. It may be understood that the opening status of the fourth water inlet 18 controlled by the second control valve 9 may be 0-100%, for example 10%, 30%, 50%, 70% or 80% etc. The second control valve 9 may be an electronic valve. The opening status of the third water inlet 3 controlled by the third control valve 10 may be 0-100%, for example 10%, 30%, 50%, 70% or 80% etc. The third control valve 10 is an electronic valve. The second control valve 9 and the third control valve 10 may form an electronic valve assembly 12.

In a specific embodiment, the second thermostat 20 is provided with a temperature control connected to the second control valve 9 and the third control valve 10. The temperature control is configured to control the opening status of the second control valve 9 and the third control valve 10 according to the temperature of the engine water jacket 40. For example, the temperature control can control the opening status of the second control valve 9 and the third control valve 10 according to the temperature of the engine. It may be understood that the temperature control can separately control the opening status of the second control valve 9 or separately control the opening status of the third control valve 10, or simultaneously control the opening status of the second control valve 9 and the third control valve 10. The position of the second control valve 9 and the third control valve 10 is relatively fixed. The sum of the openings of the second control valve 9 and the third control valve 10 may be 100%. For example, when the opening status of the second control valve 9 is 90%, the opening status of the third control valve 10 is 10%, or when the opening status of one of the second control valve 9 and the third control valve 10 is 0, the opening status of the other is 100%. When not energized, the opening temperature of the second control valve 9 and the third control valve 10 is high, and when the third control valve 10 is not opened, the opening status of the fourth water inlet 18 controlled by the second control valve 9 may be 100%. Temperature-sensitive wax is provided in the second accommodating space 201. The second thermostat 20 is provided with a temperature sensor connected to the temperature control. The temperature sensor is configured to acquire the temperature of the engine. The temperature control calculates the difference between the required temperature and the current temperature according to the temperature of the engine acquired by the temperature sensor (the current temperature), controls the expansion or shrinkage of the temperature-sensitive wax according to the difference, and controls the opening status of the second control valve 9 and the third control valve 10 according to the expansion or shrinkage of the temperature-sensitive wax. That is, the temperature control can actively control the expansion or shrinkage of the temperature-sensitive wax and control the expansion amount or shrinkage amount of the temperature-sensitive wax, and consequently accurately control the opening status of the second control valve 9 and the third control valve 10. Furthermore, the fifth water inlet always opened in the present invention can further be configured to enable the coolant to scour the temperature control continuously, so that the temperature of the temperature-sensitive wax on the temperature control is uniform.

In a specific embodiment not of the invention, the second control valve 9 and the third control valve 10 are moved in association. When the temperature control controls the second control valve 9 to close, the third control valve 10 is opened; and when the temperature control controls the third control valve 10 to close, the second control valve 9 is opened. It may be understood that the second control valve 9 and the third control valve 10 may be simultaneously partially opened, and the second control valve 9 and the third control valve 10 may have different openings, or the same opening. Of course, the second control valve 9 and the third control valve 10 may be alternately opened. For example, when the second control valve 9 is closed, the third control valve 10 is opened, and when the third control valve 10 is closed, the second control valve 9 is opened.

When the temperature of the engine sensed by the temperature sensor is lower than the opening temperature of the radiator 80, the temperature control controls the second control valve 9 to open and the third control valve 10 to close. The second control valve 9 controls the fourth water inlet 18 to be switched on and controls the opening status of the fourth water inlet 18 to adjust the amount of the coolant flowing through the bypass duct 11 and controls the amount of the coolant circulating in the engine, so that the temperature of the engine can be adjusted more accurately. When the temperature of the engine sensed by the temperature sensor is greater than or equal to the opening temperature of the radiator 80, the temperature control controls the third control valve 10 to open and the third control valve 10 controls the third water inlet 3 to be switched on, and the third passage is switched on. The third control valve 10 can control the opening status of the third water inlet 3, adjust the amount of the coolant flowing through the radiator 80, and control the amount of the coolant circulating in the engine, so that the temperature of the engine can be adjusted more accurately. It may be understood that when the third control valve 10 is opened, the second control valve 9 is partially opened or is closed. That is, the third water inlet 3 and the fourth water inlet 18 can be simultaneously partially opened, or the fourth water inlet 18 is closed while the third water inlet 3 is opened.

It may be understood that the first thermostat 30 above is a mechanical thermostat and the second thermostat 20 above is an electronic thermostat. In other implementations of the present invention, the first thermostat 30 may be an electronic thermostat and the second thermostat 20 may be an electronic thermostat as well. For the manner of adjusting the second thermostat 20, reference may be made to the first thermostat 30, and no description will be made again here in the present invention.

In a specific embodiment, the water pump 50 is an electronic water pump 50. The electronic water pump 50 can further control the flow of the engine. During warm-up of the machine, the policy of the electronic water pump 50 is determined through machinery development tests, and the minimum flow in the engine is determined in various operating conditions, in order to speed up temperature rise and reduce mechanical loss of the water pump 50.

As known from the above, the present invention includes at least the following four circulation situations:

### First situation:

When the temperature of the coolant is lower than the opening temperature of the first control valve 8, the first control valve 8 is closed and the second water inlet 7 is closed. The temperature control controls the second control valve 9 to open so as to control the fourth water inlet 18 to be switched on and the bypass duct 11 is switched on. The temperature control controls the third control valve 10 to close so as to control the third water inlet 3 to close.

The coolant is pumped from the water pump 50 to the circulation branch where the oil cooler 90 is located and the engine cylinder head water jacket 401. The coolant is split into two branches upstream of the cylinder head water jacket 401. One branch enters the EGR cooler 60 and the other branch flows through the cylinder head water jacket 401 and then is further split into two branches downstream of the cylinder head water jacket 401 and close to the exit. One branch of the coolant enters the air heater 70 and the other branch of the coolant flows out via the rear-end exit of the cylinder head water jacket 401. The coolant flowing through the cylinder head water jacket 401 and the coolant flowing through the EGR enter the first accommodating chamber via the first water inlet 1 and then enter the second accommodating chamber via the bypass duct 11. The coolant flowing through the air heater 70 enters the second accommodating chamber via the fifth water inlet and the coolant entering the second accommodating chamber flows out via the third water outlet 6 after confluence and enters the water pump 50, thereby completing a cycle in the first passage.

### Second situation:

When the temperature of the coolant is greater than or equal to the opening temperature of the first control valve 8, the first control valve 8 is opened and the second water inlet 7 is switched on. The temperature control controls the second control valve 9 to open so as to control the fourth water inlet 18 to be switched on and the bypass duct 11 is switched on. The temperature control controls the third control valve 10 to close so as to control the third water inlet 3 to close.

The coolant is pumped from the water pump 50 to the circulation branch where the oil cooler 90 is located and the engine cylinder head water jacket 401. The coolant is split into three branches upstream of the cylinder head water jacket 401. One branch enters the EGR cooler 60, one branch flows through the cylinder head water jacket 401, and the other branch enters the cylinder block water jacket 402 via the cylinder head gasket hole. The coolant flowing through the cylinder head water jacket 401 is further split into two branches downstream of the cylinder head water jacket 401 and close to the exit. One branch of the coolant enters the air heater 70 and the other branch of the coolant flows out via the rear-end exit of the cylinder head water jacket 401. The coolant flowing through the cylinder head water jacket 401, the coolant flowing through the EGR and the coolant flowing through the cylinder block water jacket 402 enter the first accommodating chamber via the first water inlet 1 and then enter the second accommodating chamber via the bypass duct 11. The coolant flowing through the air heater 70 enters the second accommodating chamber via the fifth water inlet and the coolant entering the second accommodating chamber flows out via the third water outlet 6 after confluence and enters the water pump 50, thereby completing a cycle in the second passage.

### Third situation:

The first control valve 8 is opened and the second water inlet 7 is switched on. The temperature control controls the second control valve 9 to be partially opened so as to control the fourth water inlet 18 to be partially switched on and the bypass duct 11 is partially switched on. The temperature control controls the third control valve 10 to be partially opened so as to control the third water inlet 3 to be partially switched on.

The coolant is pumped from the water pump 50 to the circulation branch where the oil cooler 90 is located and the engine cylinder head water jacket 401. The coolant is split into three branches upstream of the cylinder head water jacket 401. One branch enters the EGR cooler 60, one branch flows through the cylinder head water jacket 401, and the other branch enters the cylinder block water jacket 402 via the cylinder head gasket hole. The coolant flowing through the cylinder head water jacket 401 is further split into two branches downstream of the cylinder head water jacket 401 and close to the exit. One branch of the coolant enters the air heater 70 and the other branch of the coolant flows out via the rear-end exit of the cylinder head water jacket 401. The coolant flowing through the cylinder head water jacket 401, the coolant flowing through the EGR and the coolant flowing through the cylinder block water jacket 402 enter the first accommodating chamber via the first water inlet 1. The coolant flowing out of the first accommodating chamber is split into two branches. One branch enters the second accommodating chamber through the bypass duct 11, and the other branch enters the radiator 80 and then enters the second accommodating chamber thereafter. The coolant flowing through the air heater 70 enters the second accommodating chamber via the fifth water inlet. The coolant entering the second accommodating chamber flows out via the third water outlet 6 after confluence and enters the water pump 50, thereby completing a cycle in the third passage. In this situation, the engine operates under a low load. In this situation, the bypass duct 11 and the third water inlet 3 are both partially opened.

### Fourth situation:

The first control valve 8 is opened and the second water inlet 7 is switched on. The temperature control controls the second control valve 9 to close so as to control the fourth water inlet 18 to close and the bypass duct 11 is closed. The temperature control controls the third control valve 10 to open so as to control the third water inlet 3 to be switched on.

The coolant is pumped from the water pump 50 to the circulation branch where the oil cooler 90 is located and the engine cylinder head water jacket 401. The coolant is split into three branches upstream of the cylinder head water jacket 401. One branch enters the EGR cooler 60, one branch flows through the cylinder head water jacket 401, and the other branch enters the cylinder block water jacket 402 via the cylinder head gasket hole. The coolant flowing through the cylinder head water jacket 401 is further split into two branches downstream of the cylinder head water jacket 401 and close to the exit. One branch of the coolant enters the air heater 70 and the other branch of the coolant flows out via the rear-end exit of the cylinder head water jacket 401. The coolant flowing through the cylinder head water jacket 401, the coolant flowing through the EGR and the coolant flowing through the cylinder block water jacket 402 enter the first accommodating chamber via the first water inlet 1. The coolant in the first accommodating chamber flows into the radiator 80 via the first water outlet 2 and then enters the second accommodating chamber via the third water inlet thereafter. The coolant flowing through the air heater 70 enters the second accommodating chamber via the fifth water inlet. The coolant entering the second accommodating chamber flows out via the third water outlet 6 after confluence and enters the water pump 50, thereby completing another cycle in the third passage. In this situation, the engine operates under a high load. In this situation, the bypass duct 11 is closed and the third water inlet 3 is completely opened.

It may be understood that the first circulation situation and the second circulation situation are both small cycles and the third circulation situation and the fourth circulation situation are large cycles.

The thermostat assembly in the present invention has small cycle channels integrated therein that communicate the water outlet of the engine with the water inlet of the water pump 50. A small cycle pipe is eliminated and the cost is decreased and the footprint is reduced compared with a traditional single thermostat. Also, in the case of a high load on the engine, the large cycle can be controlled to be opened and the small cycle can be controlled to be closed in the present invention, which facilitates heat dissipation.

In the present invention, all the water inlets and all the water outlets are integrated to the thermostat assembly so that there is sufficient space to accommodate all the water inlets and all the water outlets. The thermostat may be provided to have a small volume as compared with a traditional single thermostat where all the water inlets and all the water outlets are integrated so that the traditional single thermostat has an excessively large volume and an excessively complex structure. The thermostat of the present invention has a small volume and a simple structure. Furthermore, the thermostat assembly of the present invention is provided with the second water inlet 7 connected to the cylinder block water jacket 402 and the first water inlet 1 connected to the cylinder head water jacket 401. The first water inlet 1 and the second water inlet 7 can both be provided to be short, thereby solving the technical problem of the traditional single thermostat that only one water inlet connected to the engine is provided, which causes an excessively long pipeline for the water inlet and consequently increased cost and additional footprint.

Three control valves are provided in the present invention to realize three circulation paths in the engine so that the water temperature of the engine can be accurately controlled and the performance of the engine can be improved. In the thermostat assembly of the present invention, the first water inlet 1 and the second water inlet 7 arranged on the thermostat assembly before mounting of the radiator 80 shorten the length of the pipe between the engine and the water inlet and outlet of the radiator 80, and the positions of the interfaces to the water inlet and outlet of the radiator 80 have the same or substantially the same orientation, which facilitates assembly. The present thermostat assembly is arranged between the water pump 50 and the engine cylinder block water outlet. The first water inlet 1 is directly connected to the cylinder head water jacket 401 and the second water inlet 7 is directly connected to the cylinder block water jacket 402, which saves cost and space.

Therefore, the present engine has two thermostats. One is an electronic thermostat. During cold start, in order to warm up the machine quickly, the first thermostat 30 on the cylinder block is turned off and the second thermostat 20 in the large cycle is turned off, so that water in the cylinder block does not participate in the cycle, which causes the operating temperature of the engine to rise quickly. When the water temperature rises quickly to a certain temperature, considering that the local temperature of the parts of the cylinder block will be too high, the first thermostat 30 on the cylinder block needs to be turned on so that the coolant in the cylinder block water jacket 402 can participate in the cycle to ensure the reliability. When the water temperature continues to rise, and under a low load, it is expected to obtain a low frictional loss. At this time, the water temperature should be controlled to be a little higher. Therefore, only part of the water is allowed to enter the radiator 80 and the water temperature is caused to rise as high as possible within the temperature restriction so as to reduce the fuel consumption of the engine. During high load operation, the reliability of the engine becomes the major concern in the cooling system. The second thermostat 20 enables the coolant to enter the radiator 80 at an appropriate temperature so as to control the water temperature. In a large cycle condition, the optimum operating water temperature is obtained in various conditions according to machinery development tests, and the ON and OFF of the second thermostat 20 is controlled by the temperature control (ECU) to adjust the flow temperature so as to enable the engine to operate at an optimum temperature.

The first thermostat 30 and the second thermostat 20 in the present invention increase the control range of the water temperature. The optimum water temperature can be found within the range of conditions of the overall engine with machinery development tests and emulation data. The adjustment range of the second thermostat 20 is controlled by the temperature control (ECU) with the calibration data to adjust the optimum water temperature of the engine and reduce fuel consumption of the engine.

The engine of the present invention has a more compact structure while enabling quick warm-up of the machine. It achieves the effects of low fuel consumption and low emission of harmful gases during cold start. The water temperature of the engine can be controlled accurately, so that different operating water temperatures are achieved at different rotation speed and different loads. In this way, the engine is enabled to operate at the optimum temperature, thereby achieving the effect of economic emission.

The content disclosed above is only a preferred embodiment of the present invention, and certainly is not intended to limit the scope of the invention, which is

## Claims

1. An engine, comprising: an engine water jacket (40), a water pump (50) and a thermostat assembly, the engine water jacket (40), the thermostat assembly and the water pump (50) being connected to form a circulation passage, the thermostat assembly connecting between the engine water jacket (40) and the water pump (50), the engine water jacket (40) comprising a cylinder head water jacket (401) and a cylinder block water jacket (402), the thermostat assembly being configured to enable the coolant to enter the cylinder head water jacket (401) of the engine water jacket (40) without entering the cylinder block water jacket (402) of the engine water jacket (40) during cold start;
wherein the thermostat assembly is further configured to enable the coolant to enter the cylinder head water jacket (401) and the cylinder block water jacket (402) as the temperature of the coolant rises;
**characterized in that**
a water jacket insert (110) is formed in the cylinder block water jacket (402), the water jacket insert (110) divides the cylinder block water jacket (402) into a first portion (402a) and a second portion (402b), the first portion (402a) positioned close to the cylinder head water jacket (401),
wherein the cylinder block water jacket (402) is provided with a single coolant exit (B);
wherein the water jacket insert (110) is configured to enable the flow of the coolant in the first portion (402a) to be greater than the flow of the coolant in the second portion (402b) under the action of a gap between the cylinder block water jacket insert (110) and the wall face of the cylinder block water jacket (402) having a specific width determined through emulation and machinery development to achieve the optimum effect.

2. The engine according to claim 1, wherein the water pump (50) is an electronic water pump (50).

3. A vehicle, comprising an engine according to claim 1 or 2.

## Patentansprüche

1. Motor, umfassend: einen Motorkühlmittelmantel (40), eine Wasserpumpe (50) und eine Thermostatbaugruppe, wobei der Motorkühlmittelmantel (40), die Thermostatbaugruppe und die Wasserpumpe (50) verbunden sind, um einen Zirkulationskanal zu bilden, wobei die Thermostatbaugruppe zwischen dem Motorkühlmittelmantel (40) und der Wasserpumpe (50) verbunden ist, wobei der Motorkühlmittelmantel (40) einen Zylinderkopf-Kühlmittelmantel (401) und einen Zylinderblock-Kühlmittelmantel (402) umfasst, wobei die Thermostatbaugruppe konfiguriert ist, um zu ermöglichen, dass das Kühlmittel während des Kaltstarts in den Zylinderkopf-Kühlmittelmantel (401) des Motorkühlmittelmantels (40) eintritt, ohne in den Zylinderblock-Kühlmittelmantel (402) des Motorkühlmittelmantels (40) einzutreten;
wobei
die Thermostatbaugruppe weiter konfiguriert ist, um zu ermöglichen, dass das Kühlmittel in den Zylinderkopf-Kühlmittelmantel (401) und den Zylinderblock-Kühlmittelmantel (402) eintritt, wenn die Temperatur des Kühlmittels ansteigt;
**dadurch gekennzeichnet, dass** ein Kühlmittelmantel-Einsatz (110) in dem Zylinderblock-Kühlmittelmantel (402) ausgebildet ist, wobei der Kühlmittelmantel-Einsatz (110) den Zylinderblock-Kühlmittelmantel (402) in einen ersten Abschnitt (402a) und einen zweiten Abschnitt (402b) unterteilt, wobei der erste Abschnitt (402a) nahe dem Zylinderkopf-Kühlmittelmantel (401) positioniert ist,
wobei der Zylinderblock-Kühlmittelmantel (402) mit einem einzigen Kühlmittelaustritt (B) versehen ist;
wobei der Kühlmittelmantel-Einsatz (110) konfiguriert ist, um zu ermöglichen, dass der Durchfluss des Kühlmittels in dem ersten Abschnitt (402a) größer ist als der Durchfluss des Kühlmittels in dem zweiten Abschnitt (402b) durch die Wirkung eines Spalts zwischen dem Zylinderblock-Kühlmittelmantel-Einsatz (110) und der Wandfläche des Zylinderblock-Kühlmittelmantels (402), der eine bestimmte Breite aufweist, die durch Simulation und maschinelle Entwicklung bestimmt wurde, um die optimale Wirkung zu erzielen.

2. Motor nach Anspruch 1, wobei die Wasserpumpe (50) eine elektronische Wasserpumpe (50) ist.

3. Fahrzeug, umfassend einen Motor nach Anspruch 1 oder 2.

## Revendications

1. Un moteur, comprenant : une chemise de refroidissement du moteur (40), une pompe à eau (50) et un ensemble de thermostat, la chemise de refroidissement du moteur (40), l'ensemble de thermostat et la pompe à eau (50) étant connectés pour former un passage de circulation, l'ensemble de thermostat étant connecté entre la chemise de refroidissement du moteur (40) et la pompe à eau (50), la chemise de refroidissement du moteur (40) comprenant une chemise de refroidissement de la culasse (401) et une chemise de refroidissement du bloc-cylindres (402), l'ensemble de thermostat étant configuré pour permettre au liquide de refroidissement d'entrer dans la chemise de refroidissement de la culasse (401) de la chemise de refroidissement du moteur (40) sans entrer dans la chemise de refroidissement du bloc-cylindres (402) de la chemise de refroidissement du moteur (40) pendant le démarrage à froid ;
dans lequel
l'ensemble de thermostat est en outre configuré pour permettre au liquide de refroidissement d'entrer dans la chemise de refroidissement de la culasse (401) et la chemise de refroidissement du bloc-cylindres (402) à mesure que la température du liquide de refroidissement augmente ;
**caractérisé en ce que** un insert de chemise de refroidissement (110) est formé dans la chemise de refroidissement du bloc-cylindres (402), l'insert de chemise de refroidissement (110) divisant la chemise de refroidissement du bloc-cylindres (402) en une première partie (402a) et une deuxième partie (402b), la première partie (402a) étant positionnée à proximité de la chemise de refroidissement de la culasse (401),
dans lequel la chemise de refroidissement du bloc-cylindres (402) est pourvue d'une seule sortie de liquide de refroidissement (B) ;
dans lequel l'insert de chemise de refroidissement (110) est configuré pour permettre au débit du liquide de refroidissement dans la première partie (402a) d'être supérieur au débit du liquide de refroidissement dans la deuxième partie (402b) sous l'effet d'un espace entre l'insert de chemise de refroidissement du bloc-cylindres (110) et la face de paroi de la chemise de refroidissement du bloc-cylindres (402) ayant une largeur spécifique déterminée par simulation et développement mécanique pour obtenir l'effet optimal.

2. Le moteur selon la revendication 1, dans lequel la pompe à eau (50) est une pompe à eau électronique (50).

3. Un véhicule, comprenant un moteur selon la revendication 1 ou 2.
